# EUROPÄISCHE PATENTSCHRIFT

(11) **EP 3 111 882 B1**
(45) Veröffentlichungstag und Bekanntmachung des Hinweises auf die Patenterteilung: **05.08.2020**
(21) Anmeldenummer: 15175065.0
(22) Anmeldetag: 02.07.2015
(51) Int. Cl.: A61C 9/00, A61C 13/00, B29C 67/00

(54) **VERFAHREN ZUR HERSTELLUNG EINER INDIVIDUALISIERT ZU FERTIGENDEN DENTALEN ERSATZSTRUKTUR**
METHOD FOR PRODUCING AN INDIVIDUALLY MANUFACTURED DENTAL REPLACEMENT STRUCTURE
PROCÉDÉ DE FABRICATION D'UNE STRUCTURE DE PROTHÈSE DENTAIRE À FABRIQUER DE MANIÈRE PERSONNALISÉE

(43) Veröffentlichungstag der Anmeldung: 04.01.2017
(73) Patentinhaber: Coltène/Whaledent AG, 9450 Altstaetten (CH)
(72) Erfinder: Sutter, Simon, 7000 Chur (CH); Barth, Werner, 8353 Elgg (CH); Schaufelberger, Martin, 8872 Weesen (CH)
(74) Vertreter: Hepp Wenger Ryffel AG

(56) Entgegenhaltungen:
- EP-A1- 2 848 392
- EP-A1- 2 862 699
- EP-A2- 1 464 298
- WO-A1-2005/080029
- US-A1- 2015 108 695

## Beschreibung

Die vorliegende Erfindung betrifft ein Verfahren zur Herstellung einer individualisiert zu fertigenden dentalen Ersatzstruktur, ein Verfahren zum Justieren eines 3D-Druckers in einem solchen Verfahren sowie einen 3D-Drucker gemäss den Oberbegriffen der unabhängigen Ansprüche.

Dentale Ersatzstrukturen, wie Inlays, Onlays, Brücken, Kronen oder Prothesen, bestehen in der Regel aus komplexen Formkörpern. Bei ihrer Herstellung muss die räumliche Konfiguration erhalten gebliebener Zahnteile, benachbarter und/oder antagonistischer Zähne, sowie jene des betroffenen Kiefers individuell berücksichtigt werden. Auch die ursprüngliche Form der ganz oder teilweise zu ersetzenden Zähne und ästhetische Aspekte dürfen nicht ausser Acht gelassen werden. Zur Herstellung von derartigen Ersatzstrukturen werden heutzutage überwiegend mehrstufige Abform- und Giessverfahren eingesetzt. Diese Verfahren haben sich in der Praxis zwar bewährt, sind jedoch mit einem hohen Fertigungsaufwand verbunden. Entsprechend wurde in jüngerer Zeit eine Reihe von Methoden entwickelt, um diesen Aufwand zu reduzieren und qualitativ hochwertigere Ersatzstrukturen im Dentalbereich bereitzustellen.

Ein Hauptaugenmerk wurde dabei auf die sogenannte digitale Fabrikation gerichtet, bei welcher dreidimensionale Gegenstände basierend auf computergenerierten Daten erzeugt werden. In diesem Zusammenhang sind einerseits subtraktive Fertigungsverfahren bekannt geworden, bei denen ein gewünschter Formkörper durch datengesteuertes Fräsen aus vollem Material gefertigt wird. Dies führt jedoch zwangsläufig zu erheblichem Materialaufwand. Zudem muss der anfallende Abfall in der Folge entsorgt oder aufwendig wieder aufbereitet werden.

Allerdings wurden auch additive Fabrikationsverfahren entwickelt, bei denen ein Formkörper aus einem oder mehreren Grundwerkstoffen aufgebaut wird. Eine besondere Stellung nimmt in diesem Zusammenhang der sogenannte 3D-Druck ein. 3D-Drucker haben den Vorteil, dass sie nur so viel Material einsetzen, wie tatsächlich benötigt wird. Dies bietet insbesondere bei der Herstellung von Formteilen in kleinen Stückzahlen, wie es bei der Fertigung von dentalen Ersatzstrukturen der Regelfall ist, einen erheblichen Vorteil.

So beschreibt die EP 1 021 997 A1 die Anwendung eines Laser-Sinter-Verfahrens zur Herstellung von Zahnrestaurationen, bei welchem aus einem sinterfähigen Pulver schichtweise Formkörper aufgebaut werden.

Die EP 1 243 231 A2 offenbart ein Verfahren zur Herstellung von dentalen Ersatzstrukturen aus Kunststoff, bei dem eine Unterlage bereitgestellt und auf diese das Ausgangsmaterial für die Kunststoffstruktur schichtweise über eine rechnergesteuerte Auftragevorrichtung aufgetragen wird. Nach dem Ausbringen einer Schicht wird diese ausgehärtet, bevor das Auftragen der nächsten Schicht erfolgt. Bei den verwendeten Ausgangsmaterialien handelt es sich insbesondere um hochviskose Kompositmaterialien, die nach deren Auftragung beispielsweise durch energiereiche Strahlung wie Licht polymerisiert werden können.

Die EP 2 862 699 A1 offenbart eine gattungsgemässe Dentaldruckvorrichtung mit zumindest einem Druckkopf, zumindest einem Aufnahmebereich zur Aufnahme zumindest einer individuellen Druckbasis und zumindest einer Recheneinheit, die zur Steuerung des zumindest einen Druckkopfs und/oder des zumindest einen Aufnahmebereichs zu einem Aufbringen von Druckmaterial auf zumindest eine individuell dreidimensional geformte Druckfläche der zumindest einen Druckbasis vorgesehen ist.

Bekannte Verfahren zur Herstellung von dentalen Ersatzstrukturen im 3D-Druck sind in der Regel mit erheblichem Aufwand verbunden. Insbesondere müssen hierzu verwendete 3D-Drucker vor der eigentlichen Fertigung des gewünschten Formstückes aufwendig justiert werden. Zudem müssen fallweise die Position und Geometrie einer zu bedruckenden Substruktur vor dem 3D-Druck in eine dazu verwendete Datenverarbeitungseinheit eingelesen werden. Stimmen die Basiswerte nicht exakt mit der den realen Gegebenheiten überein, kann es zu einer mangelhaften Fertigung des gewünschten Formstückes oder im schlimmsten Fall sogar zu einer Beschädigung des 3D-Druckers kommen. Aufgrund der geringen Druckgeschwindigkeit ist die Fertigung von dentalen Ersatzstrukturen im 3D-Druck darüber hinaus mit einem signifikanten Zeitaufwand verbunden, was sich nicht zuletzt in den Kosten für ein derart hergestelltes Formstück niederschlägt.

Es ist daher die Aufgabe der Erfindung, die Nachteile des Stands der Technik zu überwinden.

Insbesondere ist es eine Aufgabe der vorliegenden Erfindung, verbesserte Verfahren und Vorrichtungen zur Herstellung von individualisiert zu fertigenden dentalen Ersatzstrukturen im 3D-Druck zu schaffen.

Diese Aufgaben werden durch Verfahren gemäss den Ansprüchen 1 bis 4 sowie einen 3D-Drucker gemäss Anspruch 5 gelöst.

Ein erfindungsgemässes Verfahren zur Herstellung einer individualisiert zu fertigenden dentalen Ersatzstruktur im 3D-Druck umfasst die folgenden Schritte:
i. Mehrachsig drehbare Montierung einer Substruktur in einem 3D-Drucker, insbesondere auf einer mehrachsig drehbaren Trägerplatte, wobei die Substruktur eine dentale Gerüststruktur ist;
ii. Ermitteln der Form und/oder der Position der Substruktur im 3D-Drucker mittels eines insbesondere im 3D-Drucker integrierten Scanners;
iii. Abgleich der ermittelten Form und/oder Position der Substruktur mit 3D-Daten der individualisiert zu fertigenden dentalen Ersatzstruktur;
iv. Optional: Auftragen einer Verbindungsschicht auf der Substruktur und/oder Konditionierung der Substruktur;
v. Materialauftrag, insbesondere Auftrag eines Kompositmaterials, auf die Substruktur in einem 3D-Druckverfahren derart, dass sich die individualisiert zu fertigende dentale Ersatzstruktur ergibt, wobei das 3D-Druckverfahren mit dem 3D-Drucker (3) integriert Scanner (5) überwacht wird.

Durch ein derartiges Verfahren wird die Herstellung einer individualisiert zu fertigenden dentalen Ersatzstruktur im 3D-Druck erheblich vereinfacht. Daten betreffend die Form der zu bedruckenden Substruktur können unmittelbar vor dem 3D-Druck durch den Scanner ermittelt und in die Datenverarbeitungseinheit eingelesen werden. Allerdings können Daten, beispielsweise für verschiedene Abutments, auch in einer Datenbank hinterlegt und in die Datenverarbeitungseinheit geladen werden. In diesem Fall kann die exakte Positionierung und Ausrichtung der Substruktur im 3D-Drucker entfallen, da diese Parameter durch den Scanner ermittelt werden können.

Das erfindungsgemässe Verfahren ist damit deutlich effizienter als die im Stand der Technik beschriebenen. Zudem wird eine Reihe von Fehlerquellen, wie beispielsweise falsches Einlegen der zu bedruckenden Substruktur in dem 3D-Drucker oder Fehler bei der Eingabe der Ausgangsdaten, vermieden.

Ein weiterer Vorteil des erfindungsgemässen Verfahrens ist die Möglichkeit der Herstellung von dentalen Ersatzstrukturen, welche durch Unterschnitte formschlüssig mit der Substruktur verbunden sind. Der 3D-Druck derartiger Ersatzstrukturen erfolgt durch mehrachsig drehbare Montierung der Substruktur, insbesondere auf einer mehrachsig drehbaren Trägerplatte, im 3D-Drucker. Durch herkömmliche Verfahren hergestellte dentale Ersatzstrukturen werden in der Regel auf die Substruktur geschoben und verklebt. Dazu muss die Substruktur beispielsweise konisch ausgebildet sein, um ein Überstülpen der dentalen Ersatzstruktur zu ermöglichen. Das Wegfallen der Konizitätsanforderung gewährt zusätzliche Freiheit bei der Gestaltung dentaler Ersatzstrukturen.

Die Anwendungsmöglichkeiten des beschriebenen Verfahrens sind vielfältig. So kann die Substruktur ausgewählt sein aus einer Gruppe bestehend aus dentalen Gerüststrukturen, insbesondere aus Unterstrukturen für Brücken oder Stege, Abutments für Implantate oder Sekundärteilen; metallischen oder keramischen Werkstücken; oder dentalen Aufbauten mit keramischen, insbesondere gefrästen oder gegossenen, Kronen.

Eine individualisiert zu fertigende Zahnkrone kann beispielsweise direkt auf ein für den vorliegenden Fall geeignetes Abutment "aufgedruckt" werden.

Ein weiteres Anwendungsgebiet, welches durch das erfindungsgemässe Verfahren erschlossen wird, ist die Herstellung von individualisiert zu fertigenden dentalen Ersatzstrukturen aus halbfertigen Rohlingen. So können vorgefertigte metallische oder keramische Werkstücke als Substruktur in den 3D-Drucker eingelegt und die individualisiert zu fertigenden dentalen Ersatzstrukturen durch "Aufdrucken" der noch fehlenden Teile des jeweiligen Formkörpers vervollständigt werden. Ein ähnliches Vorgehen ist auch in Kombination mit keramischen Kronen, welche beispielsweise im Vorfeld durch Fräsen gefertigt werden, oder mit metallischen Grundstrukturen zur Fertigung von Prothesen möglich. Durch die auf halbfertigen Rohlingen basierende Teilfertigung können individualisiert zu fertigende dentale Ersatzstrukturen im 3D-Druck mit erheblich geringerem Zeit- und Materialaufwand hergestellt werden.

Die Erfindung betrifft darüber hinaus ein Verfahren zum Justieren eines 3D-Druckers in einem oben beschriebenen Verfahren zur Herstellung einer individualisiert zu fertigenden dentalen Ersatzstruktur. Das besagte Verfahren umfasst die Schritte:
a . Drucken von wenigstens einer Struktur mit einem 3D-Druckverfahren;
b . Ermitteln der Form und/oder der Position der wenigstens einen Struktur mit einem insbesondere im 3D-Drucker integrierten Scanner;
c . Vergleichen der Form und/oder der Position der Struktur mit vorgegebenen Parametern, um Vergleichswerte zu erhalten;
d. Anpassen der Einstellungen des 3D-Druckers, basierend auf den Vergleichswerten, falls erforderlich;
e. Optional: Erneutes Durchführen der Schritte i. bis iv. zur Kontrolle der Justierung.

Das beschriebene Justierungsverfahren findet insbesondere Anwendung beim 3D-Druck von hochviskosen Kompositmaterialien, wie sie im Dentalbereich verbreitet Anwendung finden. Das Aufbringen derartiger Materialien für den 3D-Druck erfordert einen speziell dafür ausgelegten Druckkopf, weshalb in der Literatur teilweise auch von 3D-Plotting die Rede ist. Im vorliegenden Zusammenhang werden die Begriffe 3D-Druck (Englisch: 3D-Printing) und 3D-Plotting allerdings synonym verwendet. Beim Ausbringen derartiger hochviskoser Kompositmaterialien durch einen 3D-Drucker entstehen innerhalb einer zu druckenden Schicht Mikrotropfen oder Mikrostränge. Im Idealfall verfliessen diese miteinander, bevor es zu einer Aushärtung des Materials, beispielsweise durch Einwirkung von Licht, kommt. Dies erfordert in der Regel eine exakte Anpassung des Punkt- oder Strang-Abstandes sowie der Flussrate an die Fliesseigenschaften des ausgebrachten Materials. Der Abstand der Mikrotropfen und Mikrostränge, deren Grösse bzw. Dicke sowie die Flussrate lassen sich mit einem erfindungsgemässen Verfahren zum Justieren eines 3D-Druckers vor dem Beginn eines jeweiligen Druckvorgangs zuverlässig einstellen.

Bei einem Verfahren zur Herstellung einer individualisiert zu fertigenden dentalen Ersatzstruktur oder einem Verfahren zum Justieren eines 3D-Druckers, wie oben beschrieben, kann das 3D-Druckverfahren mit dem insbesondere im 3D-Drucker integrierten Scanner überwacht werden. Dadurch kann insbesondere bei Abweichung der Druckqualität von vorgegebenen Spezifikationen eine erstmalige oder erneute Justierung des 3D-Druckers eingeleitet werden. Sollte das zu fertigende Werkstück Fehler aufweisen, können diese falls möglich noch während des Druckvorganges korrigiert werden. Sollte die Korrektur eines Fehlers nicht möglich sein, kann ein noch laufender Druckvorgang bei der Detektion des Fehlers abgebrochen werden, wodurch eine Zeit- und Materialersparnis erzielt wird.

Bei einem oben beschriebenen Verfahren zur Herstellung von individualisiert zu fertigenden dentalen Ersatzstrukturen im 3D-Druck kann die Form der individualisiert gefertigten dentalen Ersatzstruktur mit dem insbesondere im 3D-Drucker integrierten Scanner ermittelt und mit den in Schritt iii. bereitgestellten 3D-Daten der individualisiert zu fertigenden dentalen Ersatzstruktur verglichen werden. Damit ist eine Qualitätskontrolle des gefertigten Formstückes, insbesondere in Bezug auf dessen Oberflächengüte bzw. Oberflächenrauigkeit, erzielbar.

Die Erfindung betrifft des Weiteren einen 3D-Drucker mit einem integrierten Scanner zur Erfassung der Form und/oder der Position einer zu bedruckenden Substruktur und/oder eines gedruckten, bzw. bedruckten Objekts.

Im Zusammenhang mit der vorliegenden Erfindung kann die Funktion des Scanners beispielsweise auf den folgenden Prinzipien beruhen:
- direkter physischer Kontakt
- Lasertriangulation
- Laser time-of-flight
- Konoskopische Holographie
- Structured-light Scanning
- Modulated-light Scanning
- Stereoskopie
- Photometrie
- Silhouetten-Technik
- industrielle Computertomographie (CT)
- Kernspintomographie (MRI)

Ein derartiger 3D-Drucker umfasst:
- Einen integrierten Scanner zur Erfassung der Form und/oder der Position einer zu bedruckenden Substruktur und/oder eines gedruckten bzw. bedruckten Objekts, insbesondere einer dentalen Ersatzstruktur;
- eine mehrachsig drehbare Trägerplatte; und
- eine Steuereinheit, ausgebildet zur Durchführung eines oben beschriebenen Verfahrens zur Herstellung einer dentalen Ersatzstruktur.

Die Steuereinheit kann dabei sowohl Hardware-mässig als auch Software-mässig zur Durchführung des besagten Verfahrens ausgebildet sein. Sie kann vollständig im 3D-Drucker integriert, oder auch ganz oder teilweise extern angeordnet sein.

Bei einem derartigen 3D-Drucker ist die Form und/oder die Position einer im 3D-Drucker positionierbaren Substruktur mit einem integrierten Scanner erfassbar und einer Steuereinheit zur aufbauenden Erstellung einer individualisierten dentalen Ersatzstruktur mittels 3D-Druck zur Verfügung stellbar.

Beispielsweise kann die Steuereinheit einen an den 3D-Drucker angeschlossenen Personal-Computer umfassen. So kann die vom Scanner ermittelte Form und/oder Position der Substruktur an ein auf dem Personal-Computer installiertes CAD-Programm übermittelt mit den 3D-Daten der individualisiert zu fertigenden dentalen Ersatzstruktur abgeglichen werden. Ein darauf basierendes Volumenmodell kann an eine Druckersteuerung weitergegeben werden, welche ebenfalls Teil der Steuereinheit ist, und daraus ein Schichtenmodell für den 3D-Druck ermittelt.

Weitere Vorteile und Einzelmerkmale der Erfindung ergeben sich aus der nachfolgenden Beschreibung eines Ausführungsbeispiels und aus den Zeichnungen.

Es zeigen schematisch:
Figur 1: Ein Flussdiagramm eines erfindungsgemässen Verfahrens zur Herstellung einer individualisiert zu fertigenden dentalen Ersatzstruktur im 3D-Druck;
Figur 2: Ein erfindungsgemässes Verfahren zum Justieren eines 3D-Druckers;
Figur 3: Einen erfindungsgemässen 3D-Drucker.

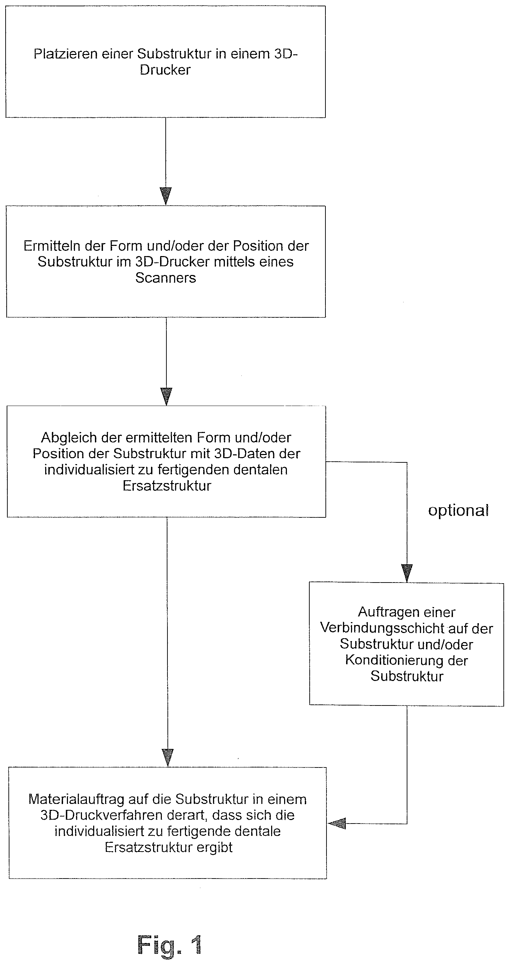

Wie aus Figur 1 hervorgeht, kann ein erfindungsgemässes Verfahren zur Herstellung einer individualisiert zu fertigenden dentalen Ersatzstruktur 1 im 3D-Druck eine Sequenz von mehreren Schritten umfassen. In einer Ausführungsform beinhaltet der erste dieser Schritte das Platzieren einer Substruktur 2 in einem 3D-Drucker 3. Im darauf folgenden Schritt wird die Form und/oder die Position der Substruktur 2 im 3D-Drucker 3 mittels eines Scanners 5 ermittelt. Darauf erfolgt ein Abgleich der ermittelten Form und/oder der Position der Substruktur 2 mit 3D-Daten der individualisiert zu fertigenden dentalen Ersatzstruktur 1. Erst nach erfolgtem Abgleich erfolgt eine Materialauftragung auf die Substruktur 2 mittels eines 3D-Druckverfahrens, derart dass sich eine individualisiert zu fertigende dentale Ersatzstruktur 1 ergibt. Optional kann vor dem eigentlichen Materialauftrag das Auftragen einer Verbindungsschicht auf die Substruktur 2 und/oder eine Konditionierung der Substruktur 2 erfolgen.

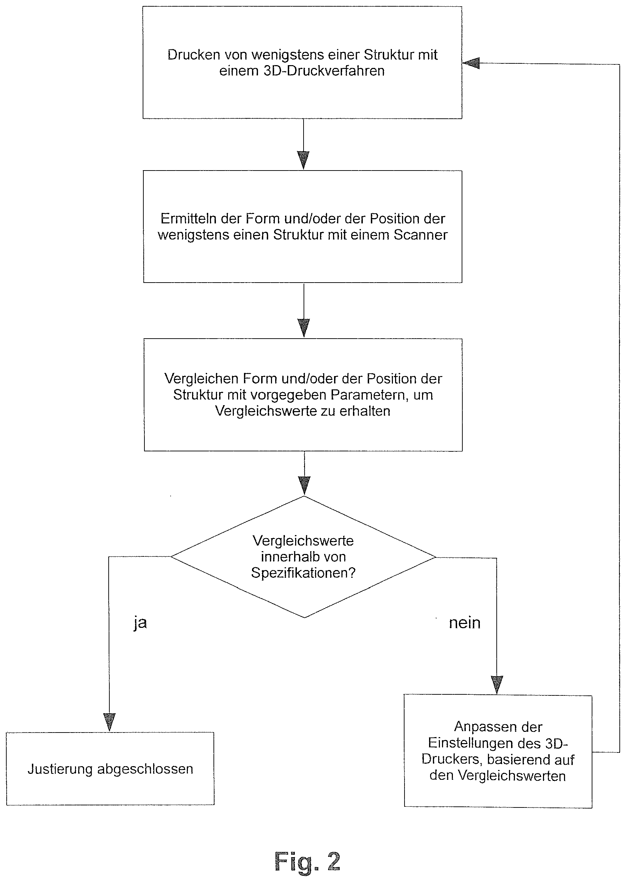

In Figur 2 ist die erfindungsgemässe Justierung eines 3D-Druckers verdeutlicht. Dabei erfolgt üblicherweise als erster Schritt des Justierungsverfahrens das Drucken von wenigstens einer Struktur mit einem 3D-Druckverfahren. Darauf wird die Form und/oder die Position der wenigstens einen Struktur mit einem Scanner ermittelt. Auf Basis der ermittelten Daten erfolgt ein Vergleich der Form und/oder der Position der Struktur mit vorgegebenen Parametern, um Vergleichswerte zu erhalten. Entsprechen diese Vergleichswerte vorgegebenen Spezifikationen, erübrigt sich eine weitere Justierung und das Verfahren ist abgeschlossen. Sollten die Vergleichswerte nicht innerhalb von vorgegebenen Spezifikationen liegen, werden die Einstellungen des 3D-Druckers insbesondere basierend auf den Vergleichswerten angepasst. Vorzugsweise wird das Justierungsverfahren nach einer solchen Anpassung wiederholt, indem erneut eine Struktur mit einem 3D-Druckverfahren gedruckt wird.

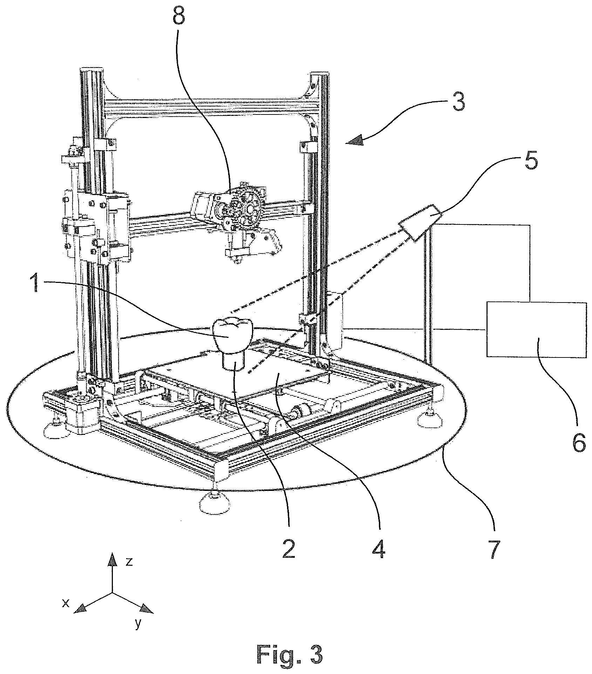

Figur 3 zeigt einen beispielhaften Aufbau eines erfindungsgemässen 3D-Druckers 3 mit integriertem Scanner 5. Der Scanner 5 ist auf einer umlaufenden Schiene 7 angebracht, wodurch er sowohl das Substrat 2 als auch die individualisiert zu fertigende dentale Ersatzstruktur 1 aus verschiedenen Perspektiven detektieren kann. Die Substruktur 2 wird auf einer Trägerplatte 4 angebracht. Im gezeigten 3D-Drucker ist die Trägerplatte 4 in x- und y-Richtung beweglich, während der Druckkopf 8 in z-Richtung beweglich ist.

## Patentansprüche

1. Verfahren zur Herstellung einer individualisiert zu fertigenden dentalen Ersatzstruktur (1) im 3D-Druck umfassend die Schritte
i. Mehrachsig drehbare Montierung einer Substruktur (2) in einem 3D-Drucker (3), insbesondere auf einer mehrachsig drehbaren Trägerplatte (4), wobei die Substruktur eine dentale Gerüststruktur ist;
ii. Ermitteln der Form und/oder der Position der Substruktur (2) im 3D-Drucker (3) mittels eines im 3D-Drucker (3) integrierten Scanners (5);
iii. Abgleich der ermittelten Form und/oder Position der Substruktur (2) mit 3D-Daten der individualisiert zu fertigenden dentalen Ersatzstruktur (1);
iv. Optional: Auftragen einer Verbindungsschicht auf der Substruktur (2) und/oder Konditionierung der Substruktur (2);
v. Materialauftrag, insbesondere Auftrag eines Kompositmaterials, auf die Substruktur (2) in einem 3D-Druckverfahren derart, dass sich die individualisiert zu fertigende dentale Ersatzstruktur (1) ergibt, wobei das 3D-Druckverfahren mit dem im 3D-Drucker (3) integrierten Scanner (5) überwacht wird.

2. Verfahren gemäss Anspruch 1, wobei die dentale Gerüststruktur, ausgewählt ist aus Unterstrukturen für Brücken oder Stege, Abutments für Implantate oder Sekundärteilen; metallischen oder keramischen Werkstücken; oder dentalen Aufbauten mit keramischen, insbesondere gefrästen oder gegossenen, Kronen.

3. Verfahren zur Herstellung einer individualisiert zu fertigenden dentalen Ersatzstruktur (1) gemäss einem der Ansprüche 1 bis 2 enthaltend ein Verfahren zum Justieren eines 3D-Druckers (3) umfassend die Schritte
a. Drucken von wenigstens einer Struktur mit einem 3D-Druckverfahren;
b. Ermitteln der Form und/oder der Position der wenigstens einen Struktur mit einem im 3D-Drucker integrierten Scanner (5);
c. Vergleichen Form und/oder der Position der Struktur mit vorgegeben Parametern, um Vergleichswerte zu erhalten;
d. Anpassen der Einstellungen des 3D-Druckers, basierend den Vergleichswerten, falls erforderlich;
e. Optional: Erneutes durchführen de Schritte i. bis iv. zur Kontrolle der Justierung.

4. Verfahren gemäss einem der Ansprüche 1 bis 3, wobei die Form der individualisiert gefertigten dentalen Ersatzstruktur (1) mit dem im 3D-Drucker (3) integrierten Scanner (5) ermittelt und mit den in Schritt c. bereitgestellten 3D-Daten der individualisiert zu fertigenden dentalen Ersatzstruktur (1) verglichen wird.

5. 3D-Drucker (3) mit
- einem integrierten Scanner (5) zur Erfassung der Form und/oder der Position einer zu bedruckenden Substruktur (2) und/oder eines gedruckten bzw. bedruckten Objekts und
- einer mehrachsig drehbaren Trägerplatte und
- einer Steuereinheit, ausgebildet zur Durchführung eines Verfahrens zur Herstellung einer dentalen Ersatzstruktur gemäss einem der Ansprüche 1, 2 oder 4.

## Claims

1. Method for the production of a dental replacement structure (1) to be produced individually in 3D printing, comprising the steps
i. Multi-axially rotatable mounting of a substructure (2) in a 3D printer (3), in particular on a multi-axially rotatable carrier plate (4), wherein the substructure is a dental framework structure;
ii. Determining the shape and/or the position of the substructure (2) in the 3D printer (3) by means of a scanner (5) integrated in the 3D printer (3);
iii. Comparison of the determined shape and/or position of the substructure (2) with 3D data of the dental replacement structure (1) to be individually produced;
iv. Optional: Application of a bonding layer on the substructure (2) and/or conditioning of the substructure (2) ;
v. Application of material, in particular application of a composite material, to the substructure (2) in a 3D printing process in such a way that the dental replacement structure (1) to be manufactured in an individualised manner is produced, the 3D printing process being monitored by the scanner (5) integrated in the 3D printer (3).

2. Method according to claim 1, wherein the dental framework structure, selected from substructures for bridges or bars, abutments for implants or secondary parts; metallic or ceramic workpieces; or dental superstructures with ceramic, in particular milled or cast, crowns.

3. Method for the production of a dental replacement structure (1) to be produced individually according to one of claims 1 to 2 including a method for adjusting a 3D printer (3) comprising the steps
a. Printing at least one structure using a 3D printing process;
b. Determining the shape and/or the position of the at least one structure with a scanner (5) integrated in the 3D printer;
c. Comparing the shape and/or the position of the structure with predetermined parameters to obtain comparison values;
d. Adapting the settings of the 3D printer, based on the comparison values, if necessary;
e. Optional: Repeating steps i. to iv. for checking the adjustment.

4. Method according to one of claims 1 to 3, wherein the shape of the individually produced dental replacement structure (1) is determined with the scanner (5) integrated in the 3D printer (3) and compared with the 3D data of the dental replacement structure (1) to be individually produced provided in step c.

5. 3D printer (3) with
- an integrated scanner (5) for detecting the shape and/or position of a substructure (2) to be printed and/or a printed object, and
- a multiaxially rotatable carrier plate and
- a control unit adapted to carry out a method for producing a dental replacement structure according to one of claims 1, 2 or 4.

## Revendications

1. Procédé pour la production d'une structure de remplacement dentaire (1) à produire individuellement en impression 3D, comprenant les étapes
i. Montage à rotation multiaxiale d'une sous-structure (2) dans une imprimante 3D (3), en particulier sur une plaque de support (4) à rotation multiaxiale, dans lequel la sous-structure est une structure d'armature dentaire;
ii. Déterminer la forme et/ou la position de la sous-structure (2) dans l'imprimante 3D (3) au moyen d'un scanner (5) intégré dans l'imprimante 3D (3);
iii. Comparaison de la forme et/ou de la position déterminée de la sous-structure (2) avec les données 3D de la structure de remplacement dentaire (1) à réaliser individuellement;
iv. Facultatif: application d'une couche de liaison sur la sous-structure (2) et/ou conditionnement de la sous-structure (2);
v.Application d'un matériau, en particulier d'un matériau composite, sur la sous-structure (2) selon un procédé d'impression 3D de manière à obtenir la structure de remplacement dentaire (1) à fabriquer de manière individualisée, le procédé d'impression 3D étant contrôlé par le scanner (5) intégré dans l'imprimante 3D (3).

2. Procédé selon la revendication 1, dans lequel la structure de l'armature dentaire, choisie parmi les sous-structures pour ponts ou barres, les piliers pour implants ou les pièces secondaires; les pièces métalliques ou céramiques ; ou les superstructures dentaires avec des couronnes céramiques, en particulier fraisées ou coulées.

3. Procédé de fabrication d'une structure de remplacement dentaire (1) à fabriquer individuellement selon l'une des revendications 1 à 2, comprenant un procédé de réglage d'une imprimante 3D (3) comprenant les étapes
a. Impression d'au moins une structure par un procédé d'impression en 3D;
b. déterminer la forme et/ou la position d'au moins une structure avec un scanner (5) intégré dans l'imprimante 3D;
c. comparer la forme et/ou la position de la structure avec des paramètres prédéterminés pour obtenir des valeurs de comparaison;
d. Adapter les paramètres de l'imprimante 3D, en les basant sur les valeurs de comparaison, si nécessaire;
e. Facultatif: Répétez les étapes i. à iv. pour vérifier le réglage.

4. Procédé selon l'une des revendications 1 à 3, dans lequel la forme de la structure de remplacement dentaire (1) produite individuellement est déterminée à l'aide du scanner (5) intégré dans l'imprimante 3D (3) et comparée aux données 3D de la structure de remplacement dentaire (1) à produire individuellement fournies à l'étape c.

5. Imprimante 3D (3) avec
- un scanner intégré (5) pour détecter la forme et/ou la position d'une sous-structure (2) à imprimer et/ou d'un objet imprimé ou non, et
- une plaque de support à rotation multiaxiale et
- une unité de contrôle adaptée pour mettre en œuvre une méthode de production d'une structure de remplacement dentaire selon l'une des revendications 1, 2 ou 4.
